# EUROPÄISCHE PATENTANMELDUNG

(11) **EP 1 617 617 A1**
(43) Veröffentlichungstag der Anmeldung: **18.01.2006**
(21) Anmeldenummer: 04016714.0
(22) Anmeldetag: 15.07.2004
(51) Int. Cl.: H04L 29/06, H04L 29/08, G05B 19/418

(54) **Verfahren und System zur Zugriffslizenzierung für ein Automatisierungsgerät**

(71) Anmelder: SIEMENS AKTIENGESELLSCHAFT, 80333 München (DE)
(72) Erfinder: Talanis, Thomas, 91336 Heroldsbach (DE); Tröster, Thomas, 91723 Dittenheim (DE); Volkmann, Frank, 90475 Nürnberg (DE)

(57) **Zusammenfassung**

Die Erfindung betrifft ein Verfahren und ein System zur Zugriffslizenzierung für ein Automatisierungsgerät. Um die Zugriffslizenzierung für ein Automatisierungsgerät (1, 2) zu vereinfachen wird vorgeschlagen, Client-seitige Lizenzen zu verwenden. Somit ist die Lizenz nicht mehr an das Automatisierungsgerät (1, 2) gekoppelt.

## Beschreibung

Die Erfindung betrifft ein Verfahren und ein System zur Zugriffslizenzierung für ein Automatisierungsgerät.

Aus dem Stand der Technik ist die Einbindung von Automatisierungsgeräten in eine Rechnernetzarchitektur, insbesondere in eine Client-Server-Struktur, bekannt. Die Lizenzierung eines Zugriffes auf bestimmte Funktionalitäten des Automatisierungsgerätes erfolgt nach dem Stand der Technik durch das Automatisierungsgerät selbst, welches die Anzahl der zugelassenen Lizenzen überwacht und verwaltet.

Aufgabe der vorliegenden Erfindung ist es, die Zugriffslizenzierung für ein Automatisierungsgerät zu vereinfachen.

Diese Aufgabe wird durch ein Verfahren nach Anspruch 1 sowie ein System nach Anspruch 5 gelöst. Bei dem erfindungsgemäßen Verfahren zur Zugriffslizenzierung für ein Funktionalitäten eines Servers in einer Client-Server-Struktur übernehmendes Automatisierungsgerät wird eine Client-seitige Lizenz verwendet.

Ein Grundgedanke der Erfindung ist es, zur Durchführung der Lizenzierung Client-seitige Lizenzen zu verwenden. Somit ist die Lizenz nicht mehr an das Automatisierungsgerät gekoppelt. Zudem ist die Verwendung von Client-Zertifikaten zur Lizenzierung besonders sicher und gewährleistet eine zuverlässige Lizenzierung.

Mit Hilfe des erfindungsgemäßen Verfahrens ist es für Nutzer auf einfache Art und Weise möglich, ein Recht (Lizenz) zum Zugriff bzw. zur Nutzung einer Funktionalität eines Automatisierungsgerätes geltend zu machen. Aufwändige Verwaltungsprozeduren können entfallen.

Als Client kann dabei beispielsweise ein Rechner, ein Notebook, PDA oder eine beliebige andere, vorzugsweise zur Bedienung eines Automatisierungsgerätes ausgebildete Maschine dienen, auf der ein Webbrowser oder eine andere, die Verwendung einer erfindungsgemäßen Client-seitigen Lizenz unterstützende Software abläuft. Zur Bedienung einer beliebigen Anzahl von Automatisierungsgeräten benötigt ein Nutzer, beispielsweise ein Wartungstechniker, nur noch eine einzige Lizenz.

Besonders vorteilhaft ist es, wenn auf dem Client hierzu keine Lizenzierungssoftware oder dergleichen installiert werden muss. Somit kann der Verwaltungsaufwand nahezu auf Null reduziert werden. Zudem sinken die Hardware-Voraussetzungen für den Client erheblich (thin client). Einzige Voraussetzung für den Client ist es, dass auf ihm ein Webbrowser oder dergleichen ablaufen kann.

Gemäß einer bevorzugten Ausführungsform der Erfindung werden die Lizenzinformationen mit einem SSL-Client-Zertifikat von dem Client zu dem Automatisierungsgerät übertragen. Mit anderen Worten ist es vorgesehen, den Mechanismus der SSL-Zertifizierung (SSL = Secure Socket Layer) als Lizenzmechanismus zu verwenden.

Es ist bereits bekannt, über ein Client-Zertifikat den Client bzw. dessen Anwender zu authentifizieren, um einen Zugriffsschutz zu gewährleisten. Erfindungsgemäß wird nun eine Menge von Lizenzinformationen in einem Zertifikat gebunden und bei dem Aufbau einer Kommunikationsverbindung zwischen Client und Automatisierungsgerät dem Automatisierungsgerät präsentiert. Dies geschieht vorzugsweise automatisch beim Aufbau der SSL-Verbindung, indem das Automatisierungsgerät das Client-Zertifikat anfordert. Nach einer Prüfung des Zertifikates durch das Automatisierungsgerät gibt dieses den Zugriff im lizenzierten Umfang frei. Hierzu enthalten die Lizenzinformationen Freigabeinformationen, die zur Nutzung von definierten Funktionen, vorzugsweise zur Nutzung von Funktionspaketen berechtigen. Welche Funktionalitäten in einem solchen Funktionspaket zusammengefasst sind, kann der Nutzer der Zertifikate vorzugsweise selbst bestimmen. Hierzu ist es in einer vorteilhaften Ausführungsform der Erfindung vorgesehen, dass die Zertifikate von einer Zertifizierungsstelle erworben werden und hierbei der Umfang der Lizenz festgelegt wird.

Das erfindungsgemäße Verfahren erlaubt ein so genanntes Floating-Lizenz-Modell, bei dem überprüft wird, wie viele Clients gleichzeitig einen Dienst auf einem Automatisierungsgerät benutzen können. Dabei wird davon ausgegangen, dass ein Nutzer, beispielsweise ein Wartungstechniker, eine Lizenz benötigt, um eine Funktionalität auf n Steuerungen zu benutzen. In gleicher Weise müssen n Nutzer n Lizenzen vorweisen, um auf ein Automatisierungsgerät gleichzeitig zugreifen zu können. In diesem Zusammenhang wird unter einem Automatisierungsgerät jedes Gerät verstanden, das SSL-Verbindungen zur Verfügung stellen und Client-Zertifikate verarbeiten kann.

Besonders vorteilhaft ist es in diesem Zusammenhang, wenn bestimmte Automatisierungsgeräte in technologischen Einheiten zusammengefasst bzw. gruppiert werden. Wird dann für jede dieser technologischen Einheiten ein Zertifikat bereitgestellt, reduziert sich die benötigte Anzahl der Lizenzen weiter.

In einer weiteren Ausführungsform der Erfindung wird anstelle von Client-Zertifikaten ein Cookie-Mechanismus verwendet, um die Lizenzinformationen von dem Client zu dem Automatisierungsgerät zu übertragen. Mit der Verwendung von Cookies entfällt die aufwändige und die Kommunikation verlangsamende Verschlüsselung des Übertragungskanals mittels SSL. Die Verwendung von Cookies zur Lizenzierung gestattet somit eine besonders preiswerte Realisierung.

Der Cookie-Mechanismus ist dabei vorzugsweise derart eingerichtet, dass der Client über seinen Webbrowser dem Automatisierungsgerät automatisch die Lizenzinformationen als Cookie präsentiert. Vorteilhafterweise können die Lizenzinformationen, wie bereits bei dem oben beschriebenen Beispiel der Client-Zertifikate, zuvor durch den Nutzer erworben werden. Der Erwerb erfolgt dabei gemäß einer besonders kundenfreundlichen Ausführungsform der Erfindung in einem Online-Verfahren, bei dem der Kunde auf einer Webseite die von ihm benötigten Lizenzen anfordert, diese online erstellt und ihm zur Verfügung gestellt werden, beispielsweise durch Übermittlung einer Lizenzdatei mittels FTP (file transfer protocol).

Um bei einer Kommunikation zwischen Client und Automatisierungsgerät den Cookie-Mechanismus verwenden zu können, muss vor der eigentlichen Kommunikation ein Informationsaustausch zwischen Client und Automatisierungsgerät erfolgen derart, dass das Automatisierungsgerät die von dem Client bereitgestellten Cookies auch ausliest.

Von Vorteil bei dem erfindungsgemäßen Verfahren ist es, dass die benötigte Infrastruktur in Form von SSL-Technologien, Cookie-Mechanismen, usw. bereits vorhanden ist. Es kann mit anderen Worten durch eine geringe Modifikation bekannter Systeme das erfindungsgemäße Lizenzierungsverfahren mit sehr geringem Aufwand umgesetzt werden.

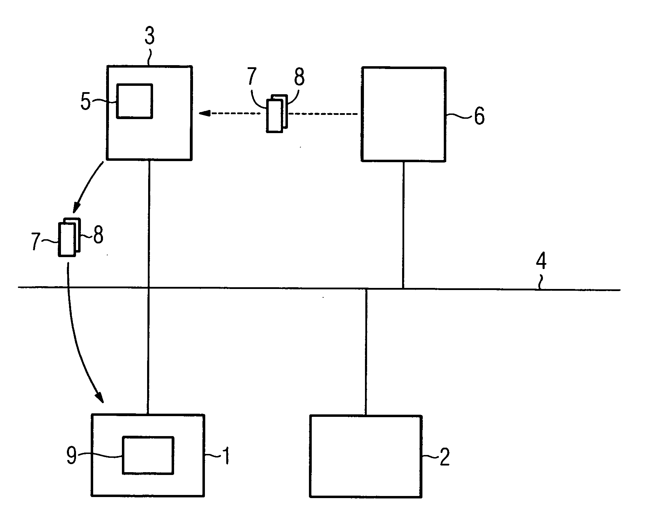

Nachfolgend wird ein Ausführungsbeispiel der Erfindung anhand der Figur näher erläutert. Diese zeigt eine schematische Übersicht über das erfindungsgemäße Verfahren.

Damit ein Nutzer auf ein Automatisierungsgerät 1, 2 in Form einer SPS (speicherprogrammierbaren Steuerung) zugreifen und dort die einzelnen Funktionsbausteine der SPS, beispielsweise ein Diagnosepuffer, einen Variablenzugriff oder dergleichen, nutzen, d.h. zugreifen, parametrisieren usw. kann, benötigt er einen Client 3, hier in Form eines Notebooks. Der Client 3 ist über ein unternehmensinternes oder externes Rechnernetz 4, beispielsweise das Internet, mit dem Automatisierungsgerät 1, 2 verbunden und zur Ausführung eines Webbrowsers 5 ausgebildet.

Vor einem Zugriff auf das Automatisierungsgerät 1, 2 stellt der Nutzer über das Netzwerk 4 eine Verbindung zwischen dem Client 3 und einem Lizenzierungsrechner 6 her. Der Lizenzierungsrechner 6, der vorzugsweise von dem Hersteller des Automatisierungsgerätes betrieben wird, stellt dabei in einem Online-Prozess SSL-Client-Zertifikate 7 mit Zugriffslizenzinformationen 8 zur Verfügung. Die Zugriffslizenzen kann der Nutzer dabei nach seinen Bedürfnissen zusammenstellen, erwerben und von dem Lizenzierungsrechner 6 auf den Client 3 übertragen kann. Wenn der Nutzer das Zertifikat 7 erhalten hat, kann er dieses vorzugsweise beliebig oft verwenden. Mit anderen Worten ist es nicht erforderlich, dass vor jedem Zugriff auf ein Automatisierungsgerät 1, 2 ein neues Zertifikat 7 erworben wird.

In einem weiteren Schritt wird die Verbindung zwischen dem Client 3 und dem Automatisierungsgerät 1, 2 hergestellt. Hierbei wird von dem Automatisierungsgerät 1, 2 eine Authentisierung mittels SSL-Client-Zertifikat angefordert. Dadurch präsentiert der Client 3 sein Zertifikat 7 zusammen mit den Lizenzinformationen 8. Besitzt der Client 3 kein gültiges Zertifikat 7, kommt keine Verbindung zustande.

Nachdem die Authentisierung erfolgt ist, werden von dem Automatisierungsgerät 1, 2 die mit dem Client-Zertifikat 7 übertragenen Lizenzinformationen 8 ausgewertet. In Abhängigkeit davon, welche Zugriffslizenzen der Nutzer zuvor erworben hat, erlaubt das Automatisierungsgerät 1, 2 nun den Zugriff auf bestimmte Funktionalitäten bzw. Funktionsbausteine.

Zum Auslesen und Auswerten der Lizenzinformationen 8 sowie zum Gewährleisten eines entsprechenden Zugriffs des Nutzers umfasst das Automatisierungsgerät 1, 2 eine Lizenzierungs- bzw. Zugriffskontrolleinheit 9, die vorzugsweise als Computerprogramm implementiert ist.

Die Lizenzierungs- bzw. Zugriffskontrolleinheit 9 des Automatisierungsgerätes 1 kann dabei derart ausgebildet sein, dass sie bei Vorfinden entsprechender Lizenzinformationen 8 den Zugriff des Clients 3 auf weitere Automatisierungsgeräte 2 gestattet, die mit ihr in einer technologischen Einheit, beispielsweise bestehend aus allen Automatisierungsgeräten einer Produktionsstrecke, gruppiert sind.

Zusammengefasst betrifft die Erfindung somit ein Verfahren und ein System zur Zugriffslizenzierung für ein Automatisierungsgerät 1, 2, insbesondere ein industrielles Automatisierungsgerät. Um die Zugriffslizenzierung zu vereinfachen wird vorgeschlagen, Client-seitige Lizenzen zu verwenden. Somit ist die Lizenz nicht mehr an das Automatisierungsgerät 1, 2 gekoppelt.

## Patentansprüche

1. Verfahren zur Zugriffslizenzierung für ein Funktionalitäten eines Servers in einer Client-Server-Struktur übernehmendes Automatisierungsgerät (1, 2), wobei eine Client-seitige Lizenz verwendet wird.

2. Verfahren nach Anspruch 1, **dadurch gekenn**- **zeichnet**, dass auf dem Client (3) keine Lizenzierungssoftware installiert ist.

3. Verfahren nach Anspruch 1 oder 2, **dadurch ge** - **kennzeichnet** , dass Lizenzinformationen (8) mit einem SSL-Client-Zertifikat (7) von dem Client (3) zu dem Automatisierungsgerät (1, 2) übertragen werden.

4. Verfahren nach einem der Ansprüche 1 bis 3, **da**- **durch gekennzeichnet** , dass die Lizenzinformationen (8) unter Verwendung eines Cookie-Mechanismus von dem Client (3) zu dem Automatisierungsgerät (1, 2) übertragen werden.

5. System zur Zugriffslizenzierung für ein Funktionalitäten eines Servers in einer Client-Server-Struktur übernehmendes Automatisierungsgerät (1, 2),
- mit einem Client (3) zur Übertragung einer Client-seitigen Lizenz an das Automatisierungsgerät (1, 2) und
- mit einem Automatisierungsgerät (1, 2), das zur Prüfung von Lizenzinformationen und zur Bereitstellung einer Zugriffskontrolle ausgebildet ist.
